# EUROPÄISCHE PATENTSCHRIFT

(11) **EP 1 221 032 B1**
(45) Veröffentlichungstag und Bekanntmachung des Hinweises auf die Patenterteilung: **17.10.2007**
(21) Anmeldenummer: 00958249.5
(22) Anmeldetag: 12.08.2000
(51) Int. Cl.: G01N 15/12, C12M 1/34

(54) **VORRICHTUNG UND VERFAHREN ZUR CHARAKTERISIERUNG VON SPHÄROIDEN**
DEVICE AND METHOD FOR CHARACTERIZING SPHEROIDS
DISPOSITIF ET PROCEDE DE CARACTERISATION DE SPHEROIDES

(30) Priorität: 28.09.1999 DE 19946458
(43) Veröffentlichungstag der Anmeldung: 10.07.2002
(73) Patentinhaber: Fraunhofer-Gesellschaft zur Förderung der angewandten Forschung e.V., 80686 München (DE)
(72) Erfinder: THIELECKE, Hagen, D-66386 St. Ingbert (DE); ROBITZKI, Andrea, D-68519 Viernheim (DE)
(74) Vertreter: Gagel, Roland
(86) Internationale Anmeldenummer: PCT/DE2000/002753
(87) Internationale Veröffentlichungsnummer: WO 2001/023865

(56) Entgegenhaltungen:
- GB-A- 2 232 769
- US-A- 4 055 799
- US-A- 4 778 657
- US-A- 4 926 114

## Beschreibung

Die Erfindung betrifft eine Vorrichtung und ein Verfahren zur Charakterisierung von Zellverbänden, die unter Mikrogravitationsbedingungen aggregiert sind. Unter Mikrogravitationsbedingungen aggregierte 3D-zellverbände, so genannte Sphäroide, können als Modelle für gentechnologische und pharmakologische Fragestellungen verwendet werden.

Der Einsatz von Sphäroiden als Modelle für pharmakologische und gentechnologische Fragestellungen erfordert deren Charakterisierung hinsichtlich der Wirkung von Pharmaka bzw. genetischen Manipulationen.
Zur Charakterisierung werden derzeit molekularbiologische Methoden, wie beispielsweise Nukleinsäurehybridisierung oder Verwendung von Antikörpern, eingesetzt. Die Auswertung erfolgt mittels Fluoreszenz-Mikroskopie. Hierfür müssen jedoch mit hohem Aufwand Schnittpräparate angefertigt werden.
Diese Methode der Charakterisierung von Sphäroiden ist daher aufwendig und erfordert zu deren Auswertung erfahrenes Fachpersonal. Ein gerade für den industriellen Einsatz wünschenswerter hoher Durchsatz, die Möglichkeit der Automatisierung und ein zerstörungsfreies Charakterisieren sind mit den bisher bekannten Methoden nicht möglich.

Aus der US 4,055,799 ist eine Vorrichtung gemäß dem Oberbegriff des Patenanspruches 1 sowie ein Verfahren zur Erfassung der elektrischen und dielektrischen Eigenschaften der Zellmembran von einzelnen lebenden Zellen oder von lebenden Zellen in einer schichtartigen Anordnung mit einer derartigen Vorrichtung bekannt. Bei dem Verfahren werden die dielektrischen Eigenschaften der Zellmembran einzelner Zellen dadurch bestimmt, dass die Zellen mit Spannungspulsen steigender Amplitude beaufschlagt werden, bis die Durchbruchspannung der Zellmembran erreicht ist. Die Höhe der Durchbruchspannung wird mit den Messelektroden erfasst. Aus der Höhe dieser Durchbruchspannung können Informationen über die elastischen und dielektrischen Eigenschaften der Zellmembran abgeleitet werden. Die hierfür erforderlichen Messzeiten lassen jedoch keinen ausreichend hohen Durchsatz zu. Weiterhin ist nicht ersichtlich, in welcher Weise dieses Verfahren zur Charakterisierung von Sphäroiden eingesetzt werden könnte.

Die Aufgabe der vorliegenden Erfindung besteht darin, eine Vorrichtung und ein Verfahren zur Charakterisierung von Sphäroiden anzugeben, die einen hohen Durchsatz, die Automatisierung sowie ein zerstörungsfreies Charakterisieren der Sphäroide ermöglicht.

Die Aufgabe wird mit der Vorrichtung und dem Verfahren nach Anspruch 1 bzw. Anspruch 6 gelöst. Vorteilhafte Ausgestaltungen des Verfahrens und der Vorrichtung sind Gegenstand der Unteransprüche.

Das erfindungsgemäße Verfahren und die erfindungsgemäße Vorrichtung beruhen auf der Charakterisierung der Sphäroide mittels Impedanz-Spektroskopie.
Bisher wurden Bio-Impedanzmessungen eingesetzt, um Gewebe- und Organschäden zu charakterisieren und zu überwachen, für Hautstudien sowie für die Tumor- und Dentalforschung. Hierbei wurden beispielsweise Elektroden direkt mit dem Gewebe in Kontakt gebracht. Impedanz-Spektrogramme von kultivierten Zellverbänden wurden aufgenommen, indem Zellkulturen auf planaren Elektrodensubstraten kultiviert wurden und die Impedanz zwischen den Elektroden bestimmt wurde, oder indem die Zellkulturen auf Filtermembranen kultiviert wurden und die Impedanz durch Zellschicht und Filtermembran bestimmt wurde (vgl. z.B. J. Wegener et al., J. Biochem. Methods 32 (1996), 151-170). Ein derartiges Vorgehen ist mit Sphäroiden nicht möglich.

Beim erfindungsgemäßen Verfahren werden Sphäroide in eine Röhre eingebracht, die zumindest in einem Bereich ihrer Längsachse, im Folgenden als Positionierbereich bezeichnet, einen geringeren Innendurchmesser als die Durchmesser der zu charakterisierenden Sphäroide hat. Die Röhre besteht in diesem Positionierbereich entweder vollständig aus elektrisch isolierendem Material oder weist an ihrem Innenumfang elektrisch isolierende Eigenschaften auf, beispielsweise aufgrund einer Beschichtung mit einer Isolationsschicht, und ist derart angeordnet, dass eingebrachte Sphäroide durch die Schwerkraft in einen trichterförmigen Übergang zum Positionierbereich sinken.
Die Röhre, beispielsweise eine Kapillare, wird zunächst luftblasenfrei mit einem Kulturmedium gefüllt. Anschließend wird der Sphäroid vollständig in den engen Positionierbereich der Röhre eingebracht, so dass er aufgrund des geringeren Innendurchmessers der Röhre in diesem Bereich umlaufend mechanischen Kontakt zur Innenwandung der Röhre aufweist. Anschließend wird über eingebrachte Elektroden ein Stromfluss entlang der Röhrenachse über das Kulturmedium und den Sphäroid erzeugt und die über dem Sphäroid abfallende Spannung gemessen. Aus Strom und Spannung wird die Impedanz gebildet. Zur Aufnahme eines Impedanzspektrogramms wird die Impedanz des Sphäroiden über einen in der Regel zusammenhängenden Frequenzbereich erfasst.

Zwischen dem Impedanzspektrogramm und dem Aufbau des Sphäroiden bzw. dessen Veränderung, beispielsweise im Bereich der Zellmembran, des Zytoplasma oder des intrazellulären Raumes, kann ein Zusammenhang hergestellt werden, der der Charakterisierung des Sphäroiden dient.
Die Impedanzspektroskopie an Sphäroiden wird bei dem erfindungsgemäßen Verfahren gerade dadurch ermöglicht, dass der Sphäroid einen umlaufenden mechanischen Kontakt zur elektrisch isolierenden Innenwandung der Röhre aufweist, so dass bei Einspeisen eines Stromes kein Stromfluss über das Kulturmedium oder andere Wege am Sphäroid vorbei möglich ist, der zu Fehlmessungen führen würde. Der Strom fließt aufgrund dieser Anordnung in jedem Falle durch den Sphäroiden. Es können somit Impedanzen und Impedanzspektren von Sphäroiden mit hoher Empfindlichkeit gemessen werden. Dadurch wird die schnelle und zerstörungsfreie Charakterisierung dieser Sphäroide möglich. Insbesondere lassen sich aus den Impedanzspektren auch Parameter für automatische Testsysteme gewinnen, so dass der Test der Wirkung von Pharmaka und genetischen Manipulationen auf Sphäroide mit einem hohen Durchsatz realisiert werden kann.

Die erfindungsgemäße Anordnung besteht aus der Röhre aus elektrisch isolierendem Material oder mit einer entsprechenden Beschichtung - zumindest im Positionierbereich, und weist im Positionierbereich, an dem der Sphäroid bei der Messung positioniert wird, einen Innendurchmesser auf, der kleiner als der Durchmesser des zu charakterisierenden Sphäroiden ist. Auf einer Seite dieses Bereiches ist ein erstes Elektrodenpaar mit einer inneren und einer äußeren Elektrode angeordnet. Auf der zweiten, in Richtung der Röhrenlängsachse gegenüberliegenden Seite des Positionierbereiches ist ein zweites Elektrodenpaar mit einer inneren und einer äußeren Elektrode angeordnet. Die innere Elektrode liegt jeweils näher am Positionierbereich als die äußere Elektrode. Die Elektroden können hierbei am Innenumfang der Röhre angebracht sein oder sich in das Innenvolumen der Röhre erstrecken. Die Röhre ist bei der vorliegenden Vorrichtung derart angeordnet, dass eingebrachte Sphäroide durch die Schwerkraft in einen trichterförmigen Übergang zum Positionierbereich sinken.
Die Vorrichtung weist weiterhin eine Messanordnung zur Einspeisung eines Wechselstromes zwischen den beiden äußeren Elektroden und zur Erfassung einer resultierenden Wechselspannung zwischen den beiden inneren Elektroden auf. Alle Elektroden müssen hierbei selbstverständlich von außerhalb der Röhre kontaktierbar sein. Die Messanordnung kann beispielsweise aus einem kommerziell erhältlichen Impedanz-Analyzer bestehen.

Die erfindungsgemäße Anordnung ermöglicht die schnelle und zerstörungsfreie Charakterisierung von Sphäroiden. Durch die Anordnung mit dem geringen Röhrendurchmesser zur Positionierung der Sphäroide und den beidseitig in Längsrichtung der Röhre angeordneten Elektrodenpaaren haben die Shunt-Wege einen sehr hohen Widerstand und der Einfluss der Elektrodenpolarisation kann aufgrund der Anordnung der getrennten Elektroden für die Erzeugung des Stromflusses und die Messung der Spannung vernachlässigt werden. Gerade hierdurch ist es möglich, die Impedanz von Sphäroiden mit hoher Empfindlichkeit zu bestimmen, die in der Regel einen geringen Widerstand aufweisen.

Es versteht sich von selbst, dass für die Durchführung der Messung der Durchmesser der Röhre an den Durchmesser der Sphäroiden angepasst sein muss - oder umgekehrt, da zu kleine Sphäroide keinen umlaufenden Kontakt zur Innenwandung der Röhre aufweisen würden. Die Größe von Sphäroiden liegt in der Regel im Bereich zwischen 0,1 und 0,5 mm, so dass der Durchmesser der Röhre im gleichen Bereich liegen muss.
Für die Charakterisierung von Sphäroiden unterschiedlicher Größe werden vorzugsweise mehrere Röhren mit unterschiedlichem Durchmesser zur Verfügung gestellt. Die einzelnen Sphäroide können hierbei beispielsweise über ein Lochraster in der Größe vorselektiert werden. Dies gewährleistet eine jeweils reproduzierbare Messung, bei der die Sphäroide in der Röhre jeweils in gleichem Maße zusammengepresst werden.

Die Röhre weist auf einer oder beiden Seiten des Positionierbereichs eine trichterförmige Aufweitung auf, die das einfache und schnelle Einbringen der Sphäroide ohne Beschädigung in den Positionierbereich ermöglicht. Die Elektroden sind hierbei vorzugsweise in dem trichterförmig aufgeweiteten Bereich angeordnet und erstrecken sich radial in die Röhre hinein. Durch die Aufweitung in diesem Bereich wird das Einbringen der Sphäroide nicht durch die Elektroden behindert.

Zur Positionierung der Sphäroide in der Röhre werden diese zusätzlich über eine auf das Kulturmedium einwirkende Kolbenpumpe in die Röhre hineingepresst oder gesaugt. Die Kontrolle der richtigen Position kann hierbei auf optischem Wege erfolgen.
In einer bevorzugten Ausführungsform wird bei dem Positioniervorgang jedoch ein Stromfluss über die Elektroden erzeugt und der resultierende Widerstand gemessen. Bei korrekter Positionierung der Sphäroide steigt dieser Widerstand stark an. Diese Kontrolle kann beispielsweise über die Messung des Gleichstromwiderstandes erfolgen.

Selbstverständlich ist es auch möglich, die Röhre im Positionierbereich selbst trichterförmig auszugestalten, so dass mit einer Röhre Sphäroide mit unterschiedlichem Durchmesser charakterisiert werden können, die sich an unterschiedlichen Stellen des trichterförmigen Positionierbereichs der Röhre festsetzen. Hierbei besteht allerdings das Problem der Reproduzierbarkeit, da die Stärke des Zusammenpressens der Sphäroide und damit deren Länge bzw. Widerstand entlang der Röhrenachse vom Anpressdruck abhängt. Dieses Problem lässt sich mit einem konstanten Röhrendurchmesser vermeiden.
In einer weiteren Ausführungsform ist eine Röhre vorgesehen, bei der sich der Innendurchmesser im Positionierbereich entlang der Längsachse in Stufen ändert. Hierdurch lassen sich ebenfalls Sphäroide verschiedener Größe fixieren.

Durch die erfindungsgemäße Anordnung und das zugehörige Verfahren lässt sich ein Sphäroid in sehr kurzer Zeit vermessen. Die Impedanzmessung lässt sich in weniger als 1 Sekunde durchführen. Die Zeit für die Positionierung liegt im Bereich weniger Minuten oder darunter.
Insbesondere für den industriellen Einsatz ist eine arrayförmige Anordnung einer Vielzahl der erfindungsgemäßen Vorrichtungen von Vorteil, die beispielsweise unterschiedliche Durchmesser aufweisen können. Hierdurch lassen sich eine Vielzahl von Sphäroiden parallel charakterisieren. Weiterhin ermöglicht der Einsatz von Röhren mit konstantem Querschnitt über den Positionierbereich das Einbringen der Sphäroide von einer Seite der Röhre und das Ausstoßen der Sphäroide nach der Messung auf der gegenüberliegenden Seite der Röhre, so dass in automatischen Messsystemen ein kontinuierlicher Durchsatz erreicht werden kann.

Ein bevorzugtes Einsatzgebiet des vorliegenden Verfahrens bzw. der zugehörigen Vorrichtung liegt im Bereich der (Chemo-)Therapeutika-Testung (Pharmakologie, Pharmakokinetik; Nebenwirkungen) und ihrer Wirkmechanismen. So lässt sich damit beispielsweise der Nachweis gentherapeutischer Ansätze an Krebs-Tumorsphäroiden durchführen. Mit Hilfe der Impedanzspektroskopie unter Einsatz des vorliegenden Verfahrens bzw. der Vorrichtung mit positioniertem genmanipuliertem Tumorzellsphäroid können morphologische Veränderungen, Disintegration des Gewebes sowie Zunahme nekrotischer Areale anhand von Impedanzänderungen der Zellmembran in kürzester zeit reproduzierbar bestimmt werden. Der Einsatz der vorliegenden Vorrichtung stellt somit ein rasches und effizientes Nachweisverfahren bezüglich der Wirksamkeit von Genkonstrukten für den Einsatz in der Tumor-Gentherapie bereit.

Die Erfindung wird nachfolgend anhand von Ausführungsbeispielen in Verbindung mit den Zeichnungen nochmals erläutert. Hierbei zeigen:
- Fig. 1:: eine Schnittdarstellung eines Ausschnitts einer Ausführungsform der erfindungsgemäßen Vorrichtung mit positioniertem Sphäroid;
- Fig. 2:: die schematische Darstellung eines Ausführungsbeispiels der erfindungsgemäßen Vorrichtung zur Charakterisierung von Sphäroiden mittels Impedanzspektroskopie ; und
- Fig. 3a/b:: in Schnittdarstellung zwei weitere Beispiele der geometrischen Form der Röhre der erfindungsgemäßen Vorrichtung.

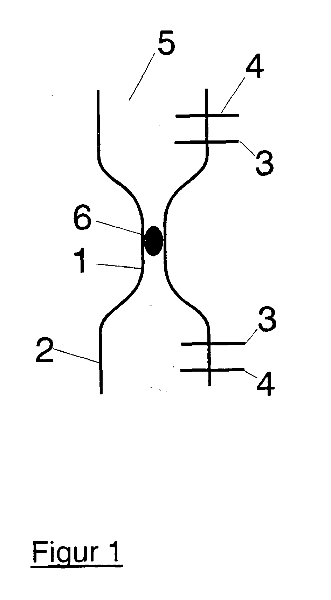

In diesem Ausführungsbeispiel besteht die erfindungsgemäße Vorrichtung aus einer Röhre mit einem Innendurchmesser von 0,2 mm im Positionierbereich des Sphäroiden und einem Innendurchmesser von 4 mm außerhalb dieses Positionierbereichs. Eine derartige Röhre, wie sie in Fig. 1 dargestellt ist, lässt sich aus einer engen Kapillare 1 aus isolierendem Material, wie z.B. Glas, herstellen, an die beidseitig Glasröhren 2 mit größerem Durchmesser angeschmolzen werden.
Im vorliegenden Beispiel haben die Kapillare eine Länge von 8 mm und die Glasröhrchen eine Länge von 40 mm. Der Übergang der Innendurchmesser von Glasröhrchen 2 und Glaskapillare 1 verläuft trichterförmig.
In den beiden angeschmolzenen Glasröhrchen 2 ist jeweils beidseitig vom Positionierbereich in einem Abstand von 15 mm zur Mitte dieses Bereiches eine erste Bohrung und in einem Abstand von 20 mm zur Mitte dieses Bereiches eine zweite Bohrung eingebracht. Die Bohrungen haben einen Durchmesser von 0,4 mm. In die Bohrungen sind vier Platindrähte 3, 4 mit einer Länge von 10 cm und einem Durchmesser von 0,3 mm eingeklebt.
Die Platindrähte bilden die äußeren Elektroden 4 bzw. die inneren Elektroden 3 für die Aufnahme des Impedanzspektrogramms. Es versteht sich von selbst, dass die hier angegebenen Abstände der Elektroden zum Zentrum der Röhre nur beispielhaft zu verstehen sind, und auf die Messung keinen wesentlichen Einfluss haben. Ebenso können die Elektroden auch in anderer Weise, beispielsweise als Beschichtung, in der Röhre angeordnet werden.

Fig. 1 zeigt weiterhin das in die Röhre luftblasenfrei eingefüllte Kulturmedium 5 sowie den positionierten, in den Positionierbereich eingepressten Sphäroid 6. Zur Durchführung der Messung werden die beiden äußeren Elektroden 4 mit einem Wechselstrom beaufschlagt. Die über das Sphäroid 6 abfallende Wechselspannung wird mit den beiden inneren Elektroden 3 erfasst.

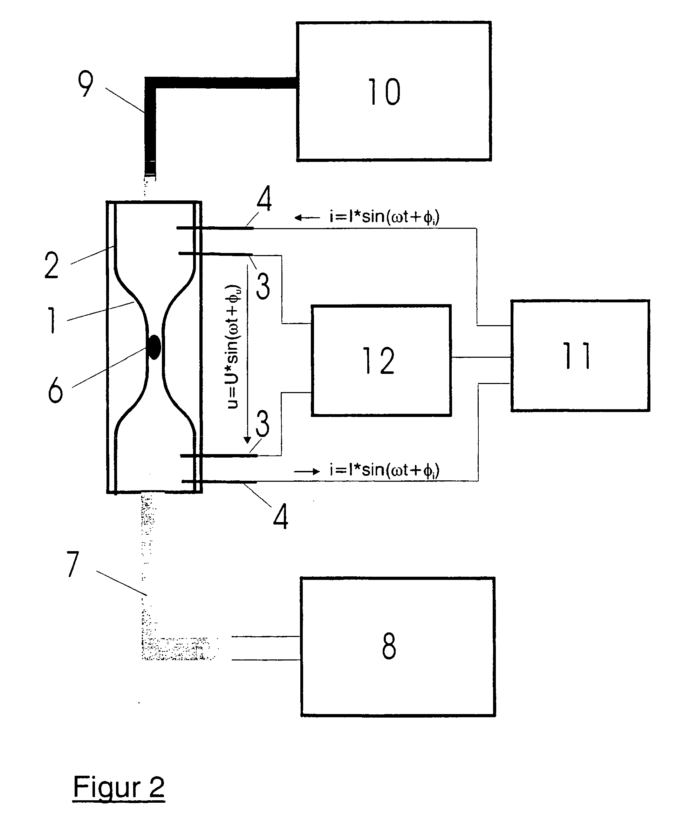

Fig. 2 zeigt schematisch ein Beispiel für die vollständige erfindungsgemäße Vorrichtung. In dieser Figur sind wiederum der enge Positionierbereich der Glaskapillare 1, die beiden äußeren Glasröhrchen 2 mit einem größeren Innendurchmesser sowie die äußeren 4 und inneren Elektroden 3 zu erkennen. Zum Einbringen des Sphäroiden wird der Glaskörper 1,2 mit den Elektroden an einer Halterung befestigt. Die untere Öffnung des Glasrohrs wird über einen mit Kulturmedium 5 gefüllten Schlauch 7 - im vorliegenden Fall mit einer Länge von 20 cm und einem Innendurchmesser von 5 mm - an ein Feinregelventil 8 mit Druckablassventil angeschlossen.
Über das Feinregelventil wird das Kulturmedium so lange aus dem Schlauch in den Glaskörper 1,2 gedrückt, bis der Glaskörper vollständig mit dem Kulturmedium 5 gefüllt ist. Anschließend wird der zu charakterisierende Sphäroid 6 durch die obere Öffnung des Glaskörpers in das Kulturmedium 5 eingebracht. Anschließend wird an die obere Öffnung des Glaskörpers ein mit Öl gefüllter Schlauch 9 angeschlossen. Der mit Öl gefüllte Schlauch ist mit seinem anderen Ende an einen beweglichen Kolben 10 angeschlossen. Danach wird das Druckablassventil 8 geöffnet. Wenn der Sphäroid 6 durch die Schwerkraft in den trichterförmigen Übergang von Glasrohr 2 und Kapillare 1 gesunken ist, wird der Sphäroid durch geeigneten Betrieb des beweglichen Kolbens 10 zentral positioniert. Die zentrale Position ist in der Figur zu erkennen. Zur Positionierung des Sphäroiden werden durch den beweglichen Kolben über den ölgefüllten Schlauch Druckunterschiede in der Kapillare erzeugt. Nach der Positionierung verbleibt der Sphäroid 6 in der entsprechenden Position, in die er gepresst wurde.

Die vier Platinelektroden 3, 4 werden an einen Impedanz-Analyzer, bestehend aus einer Stromquelle 11 und einem Spannungsmesser 12, angeschlossen. Über die außen liegenden Elektroden 4 wird ein Strom i = I* x sin(ωt + ϕᵢ) eingespeist, der so geregelt wird, dass der Spannungsabfall u = U* x sin(ωt+ϕᵤ) über die innen liegenden Elektroden 3 etwa 10 mV beträgt. Diese Wechselspannung wird über den Spannungsmesser 12 erfasst. Aus Strom und Spannung werden vom Impedanz-Analyzer der Betrag und die Phase der Impedanz gebildet. Um das charakteristische Impedanzspektrum des Sphäroiden 6 zu erhalten, werden die Impedanzen über den Frequenzbereich von 20 Hz bis 1 MHz bestimmt.

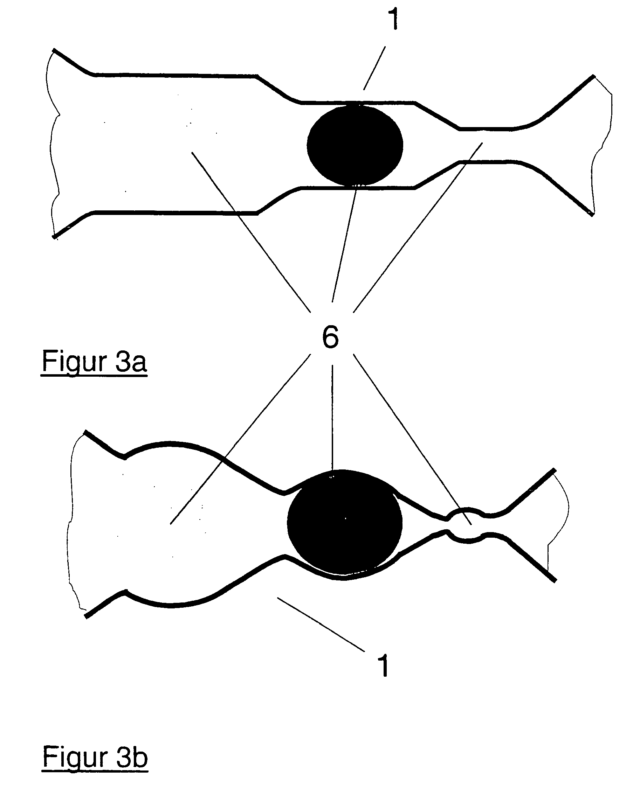

Die Figuren 3a und 3b zeigen zwei weitere Beispiele für die geometrische Form der Röhre der erfindungsgemäßen Vorrichtung. Der Röhrenquerschnitt ändert sich über den Positionierbereich 1 stufenförmig. Bei der Ausgestaltung der Figur 3b sind zusätzlich Wölbungen vorgesehen, die die Änderung der Position der Sphäroide 6 während der Messung verhindert, wenn beispielsweise unbeabsichtigt über die den Sphäroiden umgebende Flüssigkeit leichte Kräfte auf den Sphäroiden wirken.
Beide Ausführungsformen erlauben die Aufnahme von Sphäroiden 6 unterschiedlicher Größe, wie aus den Figuren deutlich zu erkennen ist. Selbstverständlich wird bei der Messung jeweils nur ein Sphäroid in der Röhre fixiert. Die in den Figuren zu erkennenden drei Sphäroide 6 sind in diesem Beispiel nur zur Veranschaulichung gleichzeitig dargestellt. Eine Vorselektion der Sphäroide nach der Größe ist bei dieser Form der Röhren nicht erforderlich. Die Kontrolle der richtigen Positionierung kann beispielsweise optisch oder elektrisch erfolgen, wie dies bereits weiter oben erläutert wurde.

## Patentansprüche

1. Vorrichtung zur Charakterisierung von Sphäroiden, bestehend aus
- einer Röhre (1, 2), die in einem als Positionierbereich bezeichneten Bereich (1) ihrer Längsachse einen Innendurchmesser aufweist, der kleiner als der Durchmesser der zu charakterisierenden Sphäroide (6) ist, wobei die Röhre in dem Positionerbereich (1) zumindest an ihrem Innenumfang aus elektrisch isolierendem Material besteht;
- einem ersten Elektrodenpaar (3,4) in der Röhre (2) auf einer ersten Seite des Bereichs (1) und einem zweiten Elektrodenpaar (3, 4) in der Röhre (2) auf einer zweiten Seite des Positionerbereichs (1), die der ersten Seite gegenüberliegt, wobei jedes Elektrodenpaar (3,4) eine innere Elektrode (3) und eine äußere Elektrode (4) aufweist, von denen die innere Elektrode (3) näher an dem Positinierbereich (1) liegt als die äußere Elektrode (4); und
- einer Messanordnung (11, 12) mit einer Stromquelle (11), die mit den äußeren Elektroden (4) verbunden ist, und einem Spannungsmesser (12), der mit den inneren Elektroden (3) verbunden ist;
**dadurch gekennzeichnet,**
**dass** die Röhre (1, 2) derart angeordnet ist, dass ein eingebrachter Sphäroid durch die Schwerkraft in einen trichterförmigen Übergang zum Positionierbereich (1) sinkt.

2. Vorrichtung nach Anspruch 1,
**dadurch gekennzeichnet,**
**dass** sich die Elektroden (3,4) radial in die Röhre (2) erstrecken.

3. Vorrichtung nach Anspruch 1 oder 2,
**dadurch gekennzeichnet,**
**dass** die Röhre (1, 2) in dem Bereich (1) einen Innendurchmesser zwischen 0,1 und 0,5 mm aufweist.

4. Vorrichtung nach einem der Ansprüche 1 bis 3,
**dadurch gekennzeichnet,**
**dass** die Röhre (1, 2) aus Glas besteht.

5. Vorrichtung nach einem der Ansprüche 1 bis 4,
**dadurch gekennzeichnet,**
**dass** sich der Innendurchmesser der Röhre (1,2) in dem Bereich (1) stufenförmig ändert.

6. Verfahren zur Charakterisierung von Sphäroiden mit den Schritten:
- Bereitstellen einer Röhre (1, 2), die in einem engen Positionierbereich (1) einen Innendurchmesser aufweist, der kleiner als der Durchmesser des zu charakterisierenden Sphäroiden ist, wobei die Röhre in dem Positionierbereich (1) zumindest an ihrem Innenumfang aus elektrisch isolierendem Material besteht;
- Auffüllen der Röhre (1, 2) mit einem flüssigen Kulturmedium (5);
- Vollständiges Einbringen eines Sphäroiden (6) in den Positionierbereich (1) der Röhre (1, 2), so dass dieser einen umlaufenden mechanischen Kontakt zur Innenwandung des Positionierbereichs (1) der Röhre (1, 2) aufweist,
**dadurch gekennzeichnet, dass**
die Röhre (1, 2) derart angeordnet wird, dass der eingebrachte Sphäroid durch die Schwerkraft in einen trichterförmigen Übergang zum Positionierbereich (1) sinkt, sowie **dadurch**, dass
ein Wechselstromfluss im Kulturmedium (5) entlang der Längsachse der Röhre über den Sphäroiden (6) erzeugt und die über den vollständig eingebrachten Sphäroiden (6) entlang der Längsachse der Röhre abfallende Wechselspannung bei unterschiedlichen Frequenzen des Wechselstromflusses gemessen wird, um ein Impedanzspektrum zu erhalten.

7. Verfahren nach Anspruch 6,
**dadurch gekennzeichnet,**
**dass** die zentrale Positionierung des Sphäroiden (6) zusätzlich mittels Ansaugen oder Einpressen durch Erzeugen eines Druckunterschiedes im Kulturmedium (5) durchgeführt wird.

8. Verfahren nach einem der Ansprüche 6 oder 7,
**dadurch gekennzeichnet,**
**dass** eine korrekte Positionierung des Sphäroiden (6) in dem Positionbereich (1) zusätzlich über die Erzeugung und Messung eines Gleichstromes entlang der Längsachse der Röhre im Positionerbereich (1) während des Einbringens des Sphäroiden (6) erfolgt.

9. Verfahren nach einem der Ansprüche 6 bis 8,
**dadurch gekennzeichnet,**
**dass** zu charakterisierende Sphäroide (6) vor dem Einbringen über ein Lochraster in der Größe vorselektiert werden.

## Claims

1. A device for characterizing spheroids comprising
- a tube (1, 2) which has an inner diameter in a region (1), the so called positioning region (1), of its longitudinal axis which is smaller than the diameter of the to-be-**characterized** spheroid (6), with the tube being composed of an electrically insulating material in the positioning region at least at its inner circumference;
- a first pair of electrodes (3, 4) in the tube (2) on one first side of the positioning region (1) and a second pair of electrodes (3, 4) in the tube (2) on a second side of the positioning region (1), which lies opposite the first side, with each pair of electrodes (3,4) having an inner electrode (3) and an outer electrode (4) of which the inner electrode (3) lies closer to the positioning region (1) than the outer electrode (4); and
- a measurement arrangement (11,12) having a current source (11) which is connected to the outer electrodes (4) and a voltage meter (12) which is connected to the inner electrodes (3),
**characterized in that** the tube (1,2) is disposed in such a manner, that an introduced spheroid sinks due to gravity into a conical-shaped transition to the positioning region (1).

2. A device according to claim 1,
**characterized in that** the electrodes (3,4) extend radially into the tube (2).

3. A device according to claim 1 or 2,
**characterized in that** in the positioning region (1), the tube (1,2) has an inner diameter of between 0.1 and 0.5mm.

4. A device according to one of the claims 1 to 3,
**characterized in that** the tube (1,2) is composed of glass.

5. A device according to one of the claims 1 to 4,
**characterized in that** the inner diameter of the tube (1,2) changes step-like in the positioning region (1).

6. A method for characterizing spheroids having the following steps:
- provision of a tube (1,2) which has in a narrow positioning region (1) an inner diameter which is smaller than the diameter of the to-be-**characterized** spheroid (6), with the tube in the positioning region (1) being composed of an electrically insulating material at least at its inner circumference;
- filling the tube (1,2) with a liquid culture medium (5);
- complete introduction of a spheroid (6) into the positioning region (1) of the tube (1,2) in such a manner that the latter has mechanical contact over the entire circumference with the inner wall of the positioning region (1) of the tube (1,2);
**characterized in that** the tube (1,2) is disposed in such a manner that the introduced spheroid (6) sinks due to gravity into a conical shaped transition of the positioning region (1); and **in that** an alternating current flow is generated in the culture medium (5) along the longitudinal axis of the tube over the spheroid (6) and the drop in alternating voltage over the completely introduced spheroid (6) along the longitudinal axis of the tube is measured at different frequencies of the alternating current flow in order to yield an impedance spectrum.

7. A method according to claim 6,
**characterized in that** the central positioning of the spheroid (6) is additionally conducted by drawing in or pressing in by means of generating a difference in pressure in the culture medium (5).

8. A method according to claim 6 or 7,
**characterized in that** correct positioning of the spheroid (6) in the positioning region (1) occurs additionally by means of generating and measuring a direct current along the longitudinal axis of the tube in the positioning region (1) during introduction of the spheroid (6).

9. A method according to one of the claims 6 to 8,
**characterized in that** to-be-**characterized** spheroids (6) are preselected according to size by means of a perforated screen.

## Revendications

1. Dispositif de caractérisation de sphéroïdes, composé de
- un tube (1, 2) qui présente, dans une zone (1) appelée zone de positionnement de son axe longitudinal, un diamètre intérieur qui est inférieur au diamètre des sphéroïdes à caractériser (6), le tube étant composé dans la zone de positionnement (1), au moins sur sa circonférence interne, de matériau isolant électriquement ;
- une première paire d'électrodes (3, 4) dans le tube (1) d'un premier côté de la zone (1) et une deuxième paire d'électrodes (3, 4) dans le tube (2) d'un deuxième côté de la zone de positionnement (1) faisant face au premier côté, chaque paire d'électrodes (3, 4) présentant une électrode interne (3) et une électrode externe (4), dont l'électrode interne (3) se situe plus près de la zone de positionnement (1) que l'électrode externe (4) ; et
- un dispositif de mesure (11, 12) à source de courant (11) qui est relié à l'électrode externe (4) et un tensiomètre (12) qui est relié à l'électrode interne (3) ;
**caractérisé en ce que**
le tube (1, 2) est disposé de manière à ce qu'un sphéroïde introduit descende par gravité dans un passage en forme d'entonnoir vers la zone de positionnement (1).

2. Dispositif selon la revendication 1,
**caractérisé en ce que**
les électrodes (3, 4) s'étendent radialement à l'intérieur du tube (2).

3. Dispositif selon la revendication 1 ou 2,
**caractérisé en ce que**
le tube (1, 2) présente dans la zone (1) un diamètre intérieur compris entre 0,1 et 0,5 mm.

4. Dispositif selon une des revendications 1 à 3,
**caractérisé en ce que**
le tube (1, 2) est composé de verre.

5. Dispositif selon une des revendications 1 à 4,
**caractérisé en ce que**
le diamètre intérieur du tube (1, 2) change par degrés dans la zone (1).

6. Procédé de caractérisation de sphéroïdes comprenant les étapes suivantes :
- préparation d'un tube (1, 2) qui présente dans une étroite zone de positionnement (1) un diamètre intérieur qui est inférieur au diamètre du sphéroïde à caractériser, le tube étant composé dans la zone de positionnement (1), du moins sur sa circonférence interne, de matériau isolant électriquement ;
- remplissage du tube (1, 2) avec un milieu de culture liquide (5) ;
- introduction complète d'un sphéroïde (6) dans la zone de positionnement (1) du tube (1, 2) afin que celui-ci présente un contact mécanique périphérique avec la paroi interne de la zone de positionnement (1) du tube (1, 2),
**caractérisé en ce que**
le tube (1, 2) est disposé de manière à ce que le sphéroïde introduit descende par gravité dans un passage en forme d'entonnoir vers la zone de positionnement (1) et qu'un flux de courant alternatif est généré dans le milieu de culture (5) le long de l'axe longitudinal du tube dans le sphéroïde (6) et que la tension alternative chutant dans le sphéroïde totalement introduit (6) est mesurée le long de l'axe longitudinal du tube à des fréquences différences du flux de courant alternatif afin d'obtenir un spectre d'impédance.

7. Procédé selon la revendication 6,
**caractérisé en ce que**
le positionnement central du sphéroïde (6) est obtenu par aspiration ou enfoncement en générant une différence de pression dans le milieu de culture (5).

8. Procédé selon une des revendications 6 ou 7,
**caractérisé en ce que**
un positionnement correct du sphéroïde (6) dans la zone de positionnement (1) est obtenu par ailleurs en générant et en mesurant un courant continu le long de l'axe longitudinal du tube dans la zone de positionnement (1) pendant l'introduction du sphéroïde (6).

9. Procédé selon une des revendications 6 à 8,
**caractérisé en ce que**
le sphéroïde à caractériser (6) peut, avant d'être introduit, être présélectionné en taille à l'aide d'une trame perforée.
